# EUROPÄISCHE PATENTSCHRIFT

(11) **EP 2 125 490 B1**
(45) Veröffentlichungstag und Bekanntmachung des Hinweises auf die Patenterteilung: **27.10.2010**
(21) Anmeldenummer: 08716001.6
(22) Anmeldetag: 23.02.2008
(51) Int. Cl.: B62D 5/06

(54) **HYDRAULISCHES LENKSYSTEM**
HYDRAULIC STEERING SYSTEM
SYSTÈME DE DIRECTION HYDRAULIQUE

(30) Priorität: 27.02.2007 DE 102007009460
(43) Veröffentlichungstag der Anmeldung: 02.12.2009
(73) Patentinhaber: Bayerische Motoren Werke Aktiengesellschaft, 80809 München (DE)
(72) Erfinder: VERKOYEN, Torsten, 41372 Niderkrüchten (DE); BOOTZ, Andreas, 80804 München (DE)
(86) Internationale Anmeldenummer: PCT/EP2008/001453
(87) Internationale Veröffentlichungsnummer: WO 2008/104343

(56) Entgegenhaltungen:
- EP-A- 1 780 099
- DE-A1- 4 428 081

## Beschreibung

Die Erfindung betrifft ein hydraulisches Lenksystem mit einem Lenkgestänge und einem das Lenkgestänge betätigenden Aktuator, dem unter Druck stehendes Hydraulikfluid zuführbar und von dem das Hydraulikfluid durch eine Rücklaufleitung abführbar ist nach dem Oberbegriff des ersten Anspruchs.

Ein hydraulisches Lenksystem kann als Zahnstangenhydrolenkung gestaltet sein und eine Pumpe umfassen, mittels derer Hydraulikfluid unter Druck zu einem Aktuator der Zahnstangenhydrolenkung gefördert werden kann. Auf diese Weise kann die vom Fahrer eines Fahrzeugs aufzubringende Lenkkraft verringert werden. Die Pumpe ist mittels einer Zuflussleitung mit der Zahnstangenhydrolenkung verbunden und es ist ferner eine Rücklaufleitung vorgesehen, mittels derer Hydraulikfluid von der Zahnstangenhydrolenkung in einen Vorratsbehälter zurückgefördert werden kann.

Bei derartigen hydraulischen Open-Center-Lenksystemen führen Achsschwingungen, die beim Überfahren von Bodenunebenheiten im eingelenkten Zustand entstehen, zu schnellen Bewegungen der Zahnstange der Zahnstangenhydrolenkung. Durch diese Bewegungen, sowie durch die damit verbundenen Lastschwingungen, werden hohe Volumenstromspitzen im Lenksystem hervorgerufen.

Die Pumpe fördert hingegen einen konstanten Volumenstrom in das Lenksystem, so dass sich anschließend an die Volumenstromspitzen Volumenstromsenken ergeben. In der Rücklaufleitung des Lenksystems führen diese Volumenstromsenken zu sehr starken Druckabsenkungen bis unter den Umgebungsdruck. Dies kann unter Umständen dazu führen, dass der Volumenstrom abreißt und aufgrund der Masseneigenschaften des Fluids eine "Zugspannung" in der strömenden Fluidsäule auftritt. So können in der Rücklaufleitung Kavitationsblasen entstehen, in denen Hydraulikfluid verdampft. Diese Kollabieren mit sehr hoher Geschwindigkeit und erzeugen dabei hochfrequente Druckspitzen. Diese Druckspitzen führen zu einer Körperschallanregung der das Hydraulikfluid leitenden Bauteile, was im Fahrzeug deutlich hörbar ist und ein akustisches Qualitätsproblem darstellt.

Dieses Akustikphänomen tritt je nach Eigenfrequenz der gesamten Achskinematik des Lenksystems mehrmals hintereinander mit einer Frequenz von ca. 10 bis 20 Hz auf. Die einzelnen Ereignisse folgen also in kurzen Abständen aufeinander und erzeugen somit ein klapperndes Geräusch. Vom Fahrer des Fahrzeugs werden solche Geräusche als besonders störend empfunden.

Die DE 197 29 777 C2 beschreibt Dämpfungsventile für eine wie beschrieben aufgebaute Servolenkung. Jeweils ein Dämpfungsventil befindet sich hier am Zu- bzw. Abfluss des Aktuators, zwischen diesem und dem Lenkventil. Die beiden Dämpfungsventile wirken wechselseitig jedes in einer Durchflussrichtung.

Bei weiteren bekannten Lenksystemen begegnet man dem Geräuschproblem durch ein Aufstauen der Rücklaufleitung mit Hilfe einer Blende, welche in der Mitte bzw. am Ende der Rücklaufleitung angeordnet ist. Mit der Blende ergibt sich in der Rücklaufleitung ein erhöhter Druck, mit dem ein Entstehen von Kavitationen verhindert wird. Zugleich ergibt sich aber auch ein unerwünschter Druckverlust, mit dem die Leistungsaufnahme des Lenksystems erhöht wird. Der Kraftstoffverbrauchsanteil für das Lenksystem steigt somit an. Darüber hinaus ist eine höhere Kühlleistung in extremen Fahrsituationen mit hoher thermischer Belastung (z.B. bei Hochgeschwindigkeitsfahrt oder Bergfahrt) erforderlich.

Weiterhin offenbart die DE 44 28 081 A1 ein hydraulisches Lenksystem mit den Merkmalen des Oberbegriffs des Anspruchs 1.

Es ist Aufgabe der Erfindung, ein hydraulisches Lenksystem bereitzustellen, das bei einfachem Aufbau eine solch exakte Dosierung des Zeitverhaltens erlaubt, dass die genannten akustischen Probleme nicht auftreten. Außerdem soll nur.ein geringer Energieaufwand für das Lenksystem erforderlich sein.

Die Aufgabe wird erfindungsgemäß mit einem hydraulischen Lenksystem nach Anspruch 1 gelöst. Vorteilhafte Weiterbildungen der Erfindung sind in den abhängigen Ansprüchen beschrieben.

Gemäß der Erfindung ist ein hydraulisches Lenksystem mit einem Lenkgestänge und einem das Lenkgestänge betätigenden Aktuator, dem unter Druck stehendes Hydraulikfluid zuführbar und von dem das Hydraulikfluid durch eine Rücklaufleitung abführbar ist, in die eine durch Aufstau des Hydraulikfluidrücklaufs Volumenstrompulsationen entgegen wirkende Einrichtung eingebaut ist, **dadurch gekennzeichnet, dass** diese Einrichtung so ausgebildet ist, dass sie das Hydraulikfluid ausschließlich beim Auftreten einer Volumenstrompulsation aufstaut.

Wird in die Rücklaufleitung vom Aktuator zu einem Vorratsbehälter, insbesondere vor diesem und nach dem Lenkventil, ein druckabhängig veränderbarer Durchflusswiderstand dem abgeführten Hydraulikfluidstrom entgegengesetzt, zum Beispiel ausgebildet als Dämpfungsventil, das den Rücklauf ausschließlich beim Auftreten einer Volumenstrompulsation, also nur bei Bedarf aufstaut, hat das den Vorteil, dass permanenter Druckverlust bei guter Akustik vermieden wird. Der Kraftstoffverbrauchsanteil der Lenkung wird reduziert.

Wenn bei dem derart verbesserten Lenksystem eine Volumenstromspitze im Hydrauliksystem auftritt, die deutlich über den Nennvolumenstrom hinausgeht, so wird der Rücklauf erfindungsgemäß aufgestaut. Dadurch steigt der Druckverlust in der Rücklaufleitung und es stellt sich bedarfsgerecht eine dämpfende Wirkung ein, ohne dass es andauernd zu einem Aufstauen von Hydraulikfluid und einem damit verbundenen Energieverbrauch kommt. Gemäß einer weiteren Ausführungsform der Erfindung besteht ist die Volumenstrompulsationen entgegen wirkende Einrichtung bevorzugt aus einem gegen eine Rückstellkraft vergrößerbaren Hydraulikfluid-Speichervolumen, das über einen als Drossel wirkenden Widerstand im Ventilschieber befüll- und entleerbar ist, wobei ein Ventilgehäuse mit einem Haupt- und mit einem Nebendurchflussquerschnitt in die Rücklaufleitung eingebaut ist, das den Ventilschieber zum Verschließen des Hauptdurchflussquerschnitts verschiebbar lagert, wobei der Ventilschieber zwei auf den Druck im Hydraulikfluid ansprechende, sich in Verschieberichtung gegenüberliegende Kolbenflächen besitzt, eine mit einer größeren wirksamen Fläche im Speichervolumen und eine mit einer kleineren wirksamen Fläche im Durchströmquerschnitt des Rücklaufs, und die Kolbenflächen so ausgewählt sind, dass der Ventilschieber einerseits bei pulsationsfreiem Hydraulikfluidrücklauf im Ventilgehäuse mit offenem Hauptdurchflussquerschnitt gehalten wird und sich andererseits durch das Auftreten von Volumenstrompulsationen in eine den Hauptdurchflussquerschnitt verschließende Stellung verschiebt, dass nachfolgend die Drossel, der Nebendurchflussquerschnitt und das Rückstellkraft belastete Speichervolumen mit dem Ventilschieber ein passiv schaltendes Zeitverzögerungselement bilden, das das selbsttätige axiale Verschieben des Ventilschiebers in Öffnungsstellung für den Hauptdurchflussquerschnitt erst dann zulässt, wenn die Volumenstrompulsationen gedämpft und/oder abgeklungen sind.

Eine solche Einrichtung ist vorteilhafterweise von ihrer mechanisch hydraulischen Wirkungsweise her mit wenigen Teilen auszuführen und ohne großen Aufwand in die Rücklaufleitung zu integrieren, da sie quasi als ein Teil eingebaut werden kann und keine weiteren Teile anzubringen sind.

Nachfolgend wird ein Ausführungsbeispiel einer erfindungsgemäßen Volumenstrompulsationen entgegen wirkenden Einrichtung beschrieben. Es zeigen:
- Fig. 1:: einen Hydraulikschaltplan eines erfindungsgemäßen in die Rücklauf- leitung eines hydraulischen Lenksystems einzubauenden Dämp- fungsventils und
- Fig. 2:: ein Schnittbild eines ausgeführten Dämpfungsventils nach Figur 1.

In den Figuren ist ein Dämpfungsventil gezeigt, welches für ein weiter nicht dargestelltes hydraulisches Lenksystem gemäß dem Stand der Technik in einem Kraftfahrzeug vorgesehen ist. Das Lenksystem besteht zum Beispiel aus einem Lenkgestänge, welches mittels eines Aktuators hydraulisch betätigbar ist, sowie aus einer Hydraulikdruck bereitstellenden Pumpe. In das hydraulische Lenksystem ist ein Lenkventil integriert, mittels dessen wahlweise eine Strömung von unter Druck stehendem Hydraulikfluid von der Pumpe zum Lenkgestänge und/oder durch eine Rücklaufleitung zu einem Vorratsbehälter geschaltet werden kann. In diese Rücklaufleitung ist das in den Figuren dargestellte Dämpfungsventil eingebaut.

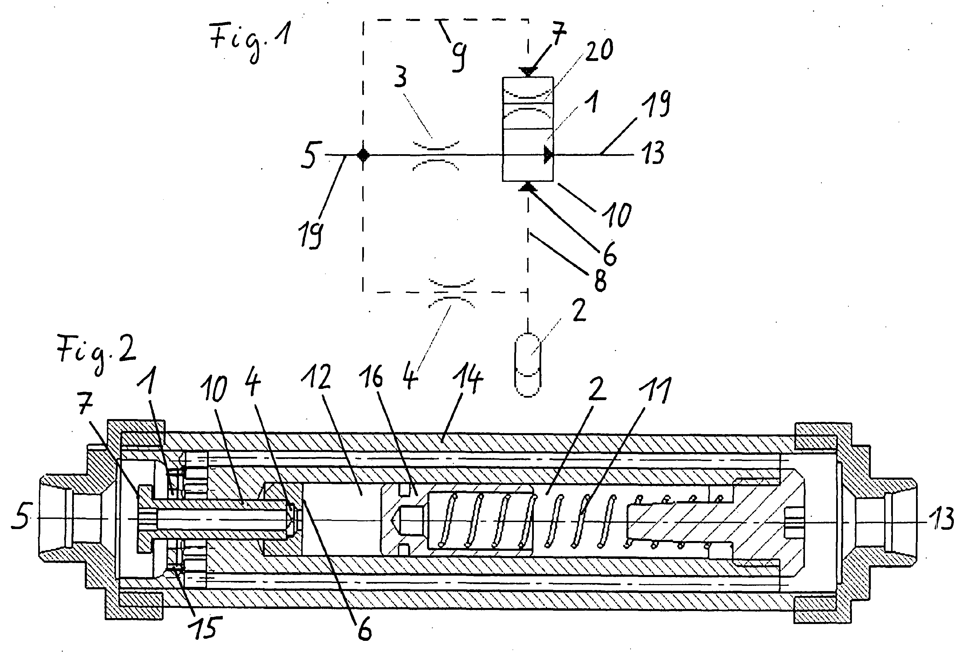

Nach Figur 1 besteht das Dämpfungsventil aus einem hydraulisch gesteuerten, das heißt hier öffen- und schließbaren, Hauptdurchflussquerschnitt 1, einem Druckspeicher 2, einer Blende 3, die den Durchflusswiderstand des Hauptdurchflussquerschnitts 1 mit einem Nebendurchflussquerschnitt (Bohrungen 15, Fig.2) wiedergibt und einem als Drossel 4 wirkenden Widerstand im Ventilschieber 10. Während der Hauptdurchflussquerschnitt 1 ständig durchströmt wird, ist der Druckspeicher 2 nur über die Drossel 4 von kleinem Querschnitt mit dem Zulauf 5 verbunden. Der Ventilschieber 10 zum Öffnen und Schließen des Hauptdurchflussquerschnitts 1 ist beidseitig druckbelastet, wobei die wirksamen Steuerflächen 6, 7 beider Seiten unterschiedlich sind, was im stationären Zustand bei gleichen Druckverhältnissen auf beiden Seiten zu einer definierten Position des Ventilschiebers 10, wie dargestellt im offenen Zustand, führt. Die größere wirksame Steuerfläche 6 wird vom Druckspeicher 12 beaufschlagt.

Beim Auftreten einer Volumenstrompulsation steigt der Druck im Zulauf 5 des Dämpfungsventils an, da bei größer werdendem Volumenstrom der Druckabfall über dem Widerstand der Blende 3 im Hauptdurchflussquerschnitt 1 ansteigt. Die hier als Drossel gezeichnete Blende 3 ergibt sich aus dem Strömungswiderstand des Hauptdurchflussquerschnitts 1 und des Nebenduchflussquerschnitts 15 (Fig. 2), die einen definierten Strömungswiderstand im offenen Zustand besitzen. Der Druck im Druckspeicher 2 kann jedoch nicht so schnell ansteigen, da sich dieser gegen den großen Widerstand der Drossel 4 erst einmal aufladen muss. Der Ventilschieber 10 schließt somit den Hauptdurchflussquerschnitt 1 aufgrund der vorhandenen Druckdifferenz an den wirksamen Steuerflächen 6, 7 der beiden Steuerleitungen 8, 9. Im Zulauf 5 stellt sich dann ein konstanter Staudruck ein, der sich über den Nebendurchflussquerschnitt, die Bohrungen 15 (Fig. 2), variieren lässt. Dessen Strömungswiderstand wird in Fig. 1 dargestellt durch die jetzt in den Hauptdurchflussquerschnitt 1 eingeschaltete zusätzliche Blende 20 zusammen mit der Blende 3.

Erreicht der Druck im Druckspeicher 2 nach einer gewissen Zeit annährend das Staudruckniveau des Zulaufs 5, schaltet der Ventilschieber 10 aufgrund der unterschiedlichen Flächenverhältnisse der wirksamen Steuerflächen 6, 7, auf denen die Steuerdrücke lasten, zurück in die gezeichnete Ausgangsposition. Im Moment des Öffnens des Hauptdurchflussquerschnitts 1 tritt sogar ein sich selber verstärkender Effekt auf, weil der Druck im Zulauf 5 aufgrund geeigneter Speicher- und Blendencharakteristik schneller sinkt als der im Druckspeicher 2 und dadurch die Kraft, die den Hauptdurchflussquerschnitt 1 öffnet, mit dessen zunehmendem Öffnungsquerschnitt ansteigt. Ist der Hauptdurchflussquerschnitt 1 wieder freigegeben, kann sich der Druckspeicher 2 über die Drossel 4 wieder entladen und somit ebenfalls wieder in seinen Ausgangszustand gelangen.

In Fig. 2 ist eine technische Ausführung des erfindungsgemäßen hydraulischen Dämpferventils in der Rücklaufleitung 19 (Fig. 1) dargestellt. Dieses besteht aus einem gegen eine Rückstellkraft einer Feder 11 vergrößerbaren Hydraulikfluid-Speichervolumen 12, dem Druckspeicher 2. Über den, durch den Widerstand als Drossel 4 wirkenden, Ventilschieber 10 ist das Hydraulikfluid-Speichervolumen 12 befüll- und entleerbar. In die in dieser Figur nicht gezeichnete Rücklaufleitung, zwischen den Zulauf 5 und den Ablauf 13, ist ein Ventilgehäuse 14 mit einem Haupt- 1 und mit einem Nebendurchflussquerschnitt eingebaut, das den Ventilschieber 10 zum Verschließen und Öffnen des Hauptdurchflussquerschnitts 1 verschiebbar lagert. Dazu besitzt der Ventilschieber 10 zwei auf den Druck im Hydraulikfluid ansprechende, sich in Verschieberichtung gegenüberliegende Kolbenflächen, eine mit einer größeren wirksamen Steuerfläche 6 im Speichervolumen 12 und eine mit einer kleineren wirksamen Steuerfläche 7 im Durchströmquerschnitt des Rücklaufs. Die Steuerflächen 6, 7 sind so ausgewählt, dass der Ventilschieber 10 einerseits bei pulsationsfreiem Hydraulikfluidrücklauf im Ventilgehäuse 14 mit offenem Hauptdurchflussquerschnitt 1 gehalten wird und sich andererseits durch das Auftreten von Volumenstrompulsationen in eine den Hauptdurchflussquerschnitt 1 verschließende Stellung verschiebt, dass nachfolgend die Drossel 4, der Nebendurchflussquerschnitt und das durch die Feder 11 Rückstellkraft belastete Speichervolumen 12 mit dem Ventilschieber 10 ein passiv schaltendes Zeitverzögerungselement bilden, das das selbsttätige axiale Verschieben des Ventilschiebers 10 in Öffnungsstellung für den Hauptdurchflussquerschnitt 1 erst dann zulässt, wenn die Volumenstrompulsationen gedämpft und/oder abgeklungen sind.

Bei einem stationären Volumenstrom ist der Hauptdurchflussquerschnitt 1 in geöffneter Stellung, der Druckspeicher 2 steht unter dem Druck, der vor dem Hauptdurchflussquerschnitt 1 im Zulauf 5 des Dämpfungsventils herrscht. Da die Steuerfläche 6 des vom Druckspeicher 2 beaufschlagten Kolbens des Ventilschiebers 10 größer ist als die gegenüber im Zulauf 5 platzierte, wird der Ventilschieber 10 bei gleichen Drücken auf beiden Seiten nach links, also in die offene Stellung für Haupt- 1 und Nebendurchflussquerschnitt, gedrückt. Bei einer Volumenstrompulsation steigt der Druck im Zulauf 5 an, da in diesem Moment mehr Volumenstrom über den Hauptdurchströmquerschnitt 1 fließen muss, was einen größeren Druckabfall am Hauptdurchströmquerschnitt 1 verursacht. Da der Druck im Druckspeicher 2 bei einer Verschiebung des federbelasteten Druckspeicherkolbens 16 um nur wenige Millimeter nicht signifikant ansteigt und über den Nebendurchflussquerschnitt, ausgebildet als Bohrungen 15 im Ventilsitz des Ventilschiebers 10, kein großer Volumenstrom fließen kann, stellt sich somit ein Zustand ein, bei dem im Zulauf 5 ein höherer Druck anliegt als im Druckspeicher 2, wodurch sich der Ventilschieber 10 trotz der unterschiedlich großen Steuerflächen 6, 7, nach rechts verschiebt und den Hauptdurchflussquerschnitt 1 verschließt. Dieser Effekt wird durch Strömungskräfte am Ventilschieber 10 weiter verstärkt.

Bei geschlossenem Hauptdurchflussquerschnitt 1 kann das Hydraulikfluid nur noch über den Nebendurchflussquerschnitt, die Bohrungen 15 im Ventilsitz des Ventilschiebers 10 abfließen. Dadurch stellt sich im Zulauf 5 ein höherer Druck ein als zuvor. Dieser Staudruck führt dazu, dass ein Teil des Hydraulikfluids durch die Drossel 4 im Ventilschieber 10 in das Speichervolumen 12 fließt und allmählich den Druck im Druckspeicher 2 erhöht, was den Speicherkolben 16 aufgrund der Vergrößerung des Speichervolumens 12 verschiebt.

Erreicht nun der Druck im Druckspeicher 2 annährend dasselbe Niveau wie im Zulauf 5, sind die Kraftverhältnisse wieder wie im stationären Zustand, bei offenem Hauptdurchflussquerschnitt 1. Dieser öffnet sich daher wieder durch Verschieben des Ventilschiebers 10 aufgrund der unterschiedlich großen Steuerflächen 6, 7. Das Öffnen des Hauptdurchflussquerschnitts 1 führt zu einer Absenkung des Staudruckniveaus. Gleichzeitig wird auch die Schließkraft am Ventilsitz minimiert, während die den Ventilschieber 10 öffnende Kraft nur geringfügig abnimmt, da im Druckspeicher 2 durch den großen Widerstand der Drossel 4 der Druck länger aufrecht erhalten bleibt. Dies hat den wichtigen Vorteil, dass der Ventilschieber 10 nicht ins Schwingen kommt, sondern direkt in die offene Position verfährt. Anschließend kann der Druckspeicher 2 über die Drossel 4 wieder entladen werden, bis sich der gleiche Druck wie im Zulauf 5 einstellt.

## Patentansprüche

1. Hydraulisches Lenksystem mit einem Lenkgestänge und einem das Lenkgestänge betätigenden Aktuator, dem unter Druck stehendes Hydraulikfluid zuführbar und von dem das Hydraulikfluid durch eine Rücklaufleitung (19) abführbar ist, in die eine durch Aufstau des Hydraulikfluidrücklaufs Volumenstrompulsationen entgegen wirkende Einrichtung eingebaut ist, die so ausgebildet ist, dass sie das Hydraulikfluid ausschließlich beim Auftreten einer Volumenstrompulsation aufstaut, **dadurch gekennzeichnet, dass** die Einrichtung ein gegen eine Rückstellkraft vergrößerbares und von der Volumenstrompulsation ladbares Hydraulikfluid-Speichervolumen (12) besitzt, welches auf eine Fläche (6) eines Ventilschiebers (10) einwirkt.

2. Hydraulisches Lenksystem nach Anspruch 1, **dadurch gekennzeichnet, dass** das gegen eine Rückstellkraft vergrößerbare Hydraulikfluid-Speichervolumen (12) der Volumenstrompulsationen entgegen wirkenden Einrichtung über einen als Drossel (4) wirkenden Widerstand im Ventilschieber (10) befüll- und entleerbar ist, wobei ein Ventilgehäuse (14) mit einem Haupt- (1) und mit einem Nebendurchflussquerschnitt in die Rücklaufleitung (19) eingebaut ist, das den Ventilschieber (10) zum Verschließen des Hauptdurchflussquerschnitts (1) verschiebbar lagert, wobei der Ventilschieber (10) zwei auf den Druck im Hydraulikfluid ansprechende, sich in Verschieberichtung gegenüberliegende Kolbenflächen (6, 7) besitzt, eine mit einer größeren wirksamen Fläche (6) im Speichervolumen (12) und eine mit einer kleineren wirksamen Fläche (7) im Durchströmquerschnitt des Rücklaufs, und die Kolbenflächen (6, 7) so ausgewählt sind, dass der Ventilschieber (10) einerseits bei pulsationsfreiem Hydraulikfluidrücklauf im Ventilgehäuse (14) mit offenem Hauptdurchflussquerschnitt (1) gehalten wird und sich andererseits durch das Auftreten von Volumenstrompulsationen in eine den Hauptdurchflussquerschnitt (1) verschließende Stellung verschiebt, dass nachfolgend die Drossel (4), der Nebendurchflussquerschnitt und das mit der Rückstellkraft belastete Speichervolumen (12) mit dem Ventilschieber (10) ein passiv schaltendes Zeitverzögerungselement bilden, das das selbsttätige axiale Verschieben des Ventilschiebers (10) in Öffnungsstellung für den Hauptdurchflussquerschnitt (1) erst dann zulässt, wenn die Volumenstrompulsationen gedämpft und/oder abgeklungen sind.

3. Hydraulisches Lenksystem nach Anspruch 2, **dadurch gekennzeichnet, dass** das Speichervolumen (12) im Ventilgehäuse (14) untergebracht ist.

## Claims

1. A hydraulic steering system with a steering linkage and an actuator actuating the steering linkage, to which pressurised hydraulic fluid can be fed and from which the hydraulic fluid can be removed by a return line (19), in which a device counteracting volume flow pulsations by blocking the hydraulic fluid return is installed and which is configured in such a way that it blocks the hydraulic fluid exclusively when a volume flow pulsation occurs, **characterised in that** the device has a hydraulic fluid storage volume (12), which can be loaded by the volume flow pulsation, can be enlarged against a restoring force and acts on a surface (6) of a valve slide (10).

2. A hydraulic steering system according to claim 1, **characterised in that** the hydraulic fluid storage volume (12), which can be enlarged against a restoring force, of the device counteracting volume flow pulsations can be filled and emptied by means of a resistance acting as a throttle (4) in the valve slide (10), a valve housing (14) with a main through-flow cross section (1) and with a secondary through-flow cross section being installed in the return line (19), which valve housing displaceably mounts the valve slide (10) to close the main through-flow cross section (1), the valve slide (10) having two piston surfaces (6, 7) responding to the pressure in the hydraulic fluid and opposing one another in the displacement direction, one with a larger effective surface (6) in the storage volume (12) and one with a smaller effective surface (7) in the through-flow cross section of the return and the piston surfaces (6, 7) being selected in such a way that the valve slide (10), on the one hand, when the hydraulic fluid return is free of pulsations, is held in the valve housing (14) with an open main through-flow cross section (1) and, on the other hand, is displaced by the occurrence of volume flow pulsations into a position closing the main through-flow cross section (1), and **In that**, subsequently, the throttle (4), the secondary through-flow cross section and the storage volume (12) loaded with the restoring force, with the valve slide (10), form a passively switching time delay element, which allows the automatic axial displacement of the valve slide (10) into the opening position for the main through-flow cross section (1) only when the volume flow pulsations are damped and/or have died down.

3. A hydraulic steering system according to claim 2, **characterised in that** the storage volume (12) is accommodated in the valve housing (14).

## Revendications

1. Système de direction hydraulique comportant une colonne de direction et un actionneur pour la colonne de direction, l'actionneur recevant du liquide hydraulique sous pression qui peut être évacué par une conduite de retour (19) équipée d'une installation agissant par accumulation du liquide hydraulique de retour contre les pulsations de débit, cette installation accumulant du liquide hydraulique exclusivement lorsque se produit une pulsation de débit,
système **caractérisé en ce que**
l'installation comporte un volume accumulateur de liquide hydraulique (12) qui peut être agrandi contre une force de rappel et qui se charge par la pulsation de débit, ce volume agissant sur une surface (6) d'une soupape coulissante (10).

2. Système de direction hydraulique selon la revendication 1, **caractérisé en ce que**
l'installation qui agit contre les pulsations de débit par un volume accumulateur de liquide hydraulique (12) s'agrandissant contre une force de rappel, se remplit et se vide à travers une résistance dans la soupape coulissante (10), fonctionnant comme organe d'étranglement (4),
un boîtier de soupape (14) ayant une section principale de passage (1) et une section auxiliaire de passage étant monté dans la conduite de retour (19), recevant la soupape coulissante (10) de façon coulissante pour fermer la section principale de passage (1),
la soupape coulissante (10) ayant deux surfaces de piston (6, 7) opposées dans la direction de coulissement et soumises à la pression du liquide hydraulique, à savoir une grande surface active (6) dans le volume accumulateur (12) et une petite surface active (7) dans la section de passage du retour, et
les surfaces de piston (6, 7) sont choisies pour que la soupape coulissante (10) soit d'une part maintenue avec la section principale de passage (1), ouverte en cas de retour de liquide hydraulique sans pulsation dans le boîtier de soupape (14), et d'autre part coulissée dans une position fermant la section principale de passage (1) lorsque des pulsations de débit se produisent, de façon que l'organe d'étranglement (4), la section de passage auxiliaire et le volume accumulateur (12) sollicité par une force de rappel, avec la soupape coulissante (10), constituent un élément de temporisation à commutation passive qui n'autorise le coulissement axial automatique de la soupape coulissante (10) en position d'ouverture pour la section principale de passage (1) seulement lorsque les pulsations de débit sont amorties et/ou on disparues.

3. Système de direction hydraulique selon la revendication 2, **caractérisé en ce que**
le volume accumulateur (12) est logé dans le boîtier de soupape (14).
